# EUROPÄISCHE PATENTSCHRIFT

(11) **EP 2 104 700 B1**
(45) Veröffentlichungstag und Bekanntmachung des Hinweises auf die Patenterteilung: **09.03.2011**
(21) Anmeldenummer: 07846954.1
(22) Anmeldetag: 03.12.2007
(51) Int. Cl.: C08J 3/24, C09D 5/00, C08G 18/80, C08G 18/00, C08G 18/58, C09D 163/00

(54) **VERFAHREN ZUM BESCHICHTEN EINES HALBZEUGS**
METHOD FOR COATING A SEMIFINISHED PRODUCT
PROCÉDÉ DE REVÊTEMENT D'UN PRODUIT SEMI-FINI

(30) Priorität: 22.12.2006 DE 102006062346
(43) Veröffentlichungstag der Anmeldung: 30.09.2009
(73) Patentinhaber: Daimler AG, 70327 Stuttgart (DE)
(72) Erfinder: MARTEN, Anita, 89134 Blaustein (DE)
(74) Vertreter: JENSEN & SON
(86) Internationale Anmeldenummer: PCT/EP2007/010465
(87) Internationale Veröffentlichungsnummer: WO 2008/080480

(56) Entgegenhaltungen:
- EP-A- 1 571 188
- DE-A1- 10 327 365
- US-A- 4 442 146
- US-A- 4 476 259

## Beschreibung

Die Erfindung betrifft ein Verfahren zum Beschichten eines Halbzeugs der im Oberbegriff des Patentanspruchs 1 angegebenen Art. Die Erfindung betrifft weiterhin ein Halbzeug sowie ein Gemisch mit miteinander vernetzbaren chemischen Komponenten der in den Patentansprüchen 8 bzw. 9 angegebenen Art.

Gemische mit vernetzbaren chemischen Komponenten, welche als organisch Beschichtungen für Halbzeuge wie beispielsweise Karosseriebandbleche verwendet werden, dienen dem permanenten Korrosionsschutz. Sie werden in der Regel beim Stahlhersteller auf die als Bandblechrollen (sog. Coils) ausgebildeten Halbzeuge aufgetragen. Die dazu verwendeten und an sich bekannten Verfahren umfassen nach dem Reinigung des Halbzeugs im Allgemeinen die Schritte: Auftragen des Gemischs, Trocknen des Gemischs und Aushärten des Gemischs in Abhängigkeit von den jeweils verwendeten Komponenten. In weiteren Schritten wird das Halbzeug mit dem ausgehärteten Gemisch abgekühlt und mit Ziehöl oder anderem Öl beschichtet. Dieser Prozess wird begleitet von einem umfangreichen Prüfungsprogramm, das sowohl in-line als auch off-line erfolgen kann. Die nach dem Prüfen freigegebenen Halbzeuge werden anschließend an Automobilhersteller ausgeliefert. Dort werden aus den vorbehandelten Halbzeugen unterschiedliche Bauteile zugeschnitten, umgeformt und mittels unterschiedlicher Fügeverfahren zu Rohkarosserien gefügt (z.B. Widerstandspunktschweißen, Laserschweißen, Kleben, mechanische Fügeverfahren). Dabei wird jedoch nicht nur das Halbzeug sondern auch die Beschichtung beansprucht und dabei mehr oder weniger geschädigt. In bisher bekannten Verfahren wird dem nur zum Teil durch Verwendung von flexibilisierenden Bindemittelkomponenten und/oder dem Zusatz von Weichmachern und/oder anderen weichmachenden Komponenten entgegengewirkt, was in Abhängigkeit von der Schichtstärke mit einer Herabsetzung der Korrosionsschutzperformance bzw. einer vorprogrammierten Alterung der Beschichtung einher geht. Die entstandene Rohkarosserie wird anschließend gereinigt und weiteren Lackierprozessen zugeführt. Hierbei ist wesentlich, dass nicht zwangsläufig alle Bauteile aus organisch beschichtetem Material gefertigt sein müssen. Es werden beidseitig, einseitig, unterschiedlich oder gar nicht beschichtete Teile verbaut, die zudem aus unterschiedlichen sowie unterschiedlich beschichteten Substratmaterialien bestehen können (Mischbauweise). Weiterhin werden nicht alle Oberflächen mit der weiteren Lackierung erfasst (insbesondere Flanschbereiche, Hohlräume) und Oberflächen auch bewusst unterschiedlich oder gar nicht lackiert (beispielsweise Außenhaut, Innenteil). Demzufolge umfassen die Anforderungen, die an derartige Gemische und Halbzeuge neben Korrosionsschutz gestellt werden müssen, folgende Aspekte:
"Umformverhalten" des Halbzeugs bzw. des ausgehärteten Gemischs in Verbindung mit unterschiedlichen Mengen Ziehöl, wobei organische Beschichtungen in der Regel bereits von sich aus eine gewollte aber unterschiedlich ausgeprägte Schmierwirkung aufweisen;
"Umformbarkeit" des Halbzeugs bzw. des ausgehärteten Gemischs, womit die Haftung auf dem Halbzeug und der Korrosionsschutz der Beschichtung nach einer Umformung des Halbzeugs bezeichnet werden;
"Fügbarkeit", womit beispielsweise die Verträglichkeit des ausgehärteten Gemischs mit Schweißverfahren beschrieben wird, welche eine ausreichende elektrische Leitfähigkeit des Gemischs voraussetzen. Weiterhin ist darunter die Verträglichkeit des Gemischs bzw. des beschichteten Halbzeugs mit Laserschweißverfahren, Klebeverfahren und anderen, beispielsweise mechanischen Fügeprozessen zu verstehen.

Mit anderen Worten muss das als organische Vorbeschichtung verwendete Gemisch (Beschichtung) eine Verträglichkeit mit allen relevanten Prozess-Schritten beim Automobilbau aufweisen. Darunter fällt beispielsweise auch eine ausreichende Alkalibeständigkeit der Beschichtung, wenn sie nach dem Rohbau und vor einer weiteren Lackierung einer alkalischen Reinigung unterzogen wird. Entsprechendes gilt beispielsweise für die Beständigkeit bzw. verträglichkeit gegenüber Vorbehandlungsbädern (z. B. Phosphatierbad) und nachfolgenden Lackierprozessen (z. B. KTL), sowie für die Lösungsmittel- und UV-Beständigkeit der Beschichtung. Zusätzlich müssen Umweltverträglichkeit, Arbeitsschutz und ökonomische Aspekte Berücksichtigung finden.

Neben den Anforderungen an das ausgehärtete Gemisch werden auch Anforderungen an das fließfähige Gemisch gestellt. Diese betreffen u. a. die Lagerstabilität, das Absetzverhalten sowie die wiederaufrührbarkeit insbesondere bei Zusatz großer Mengen bzw. schwerer Pigmente. Weitere zu beachtende Aspekte umfassen die Viskosität und das rheologische Verhalten des flüssigen Gemischs sowie die als Reaktivverdünner geeigneten Lösungsmitteltypen.

Aus dem Stand der Technik sind dem Fachmann verschiedene, als organische Beschichtungen verwendete Gemische - meist Hochtemperatureinbrennlacke - unterschiedlicher Hersteller bekannt, die das geforderte Anforderungsprofil aufweisen.

Als nachteilig an den bekannten Verfahren zum Beschichten von Halbzeugen sowie an den dafür geeigneten Gemischen ist der Umstand anzusehen, dass diese relativ zeitaufwändig und bei vergleichsweise hohen Temperaturen ausgehärtet werden müssen und damit zu erhöhten Produktionskosten führen. Als nachteilig an den bekannten Halbzeugen ist der Umstand anzusehen, dass diese nach der Beschichtung eine relativ spröde Oberfläche aufweisen. Diese wird durch folgende Bearbeitungsschritte häufig beschädigt, was zu einer signifikanten Verschlechterung der Korrosionsschutzperformance des Halbzeugs führt.

Das Dokument EP-A-1 571 188 offenbart z.B. ein Verfahren (siehe Absatz [0074]) zum Beschichten von Stahl-Platten, die Anwendung im Automobilbereich finden (siehe Absätze [0002], [0059], [0060] und [0074]). In den Schritten 1) bis 3) von EP-A-1 571 188 werden die vernetzbaren chemischen Komponenten zusammengemischt und auf die Stahl-Platten aufgetragen. Im Schritt 4) werden die Stahl-Platten einem ersten Härteprozess bei 140°C für ca. 10 Minuten unterzogen, bei welchem lediglich eines des Vernetzers reagiert. Anschliessend werden im Schritt 6) die Stahl-Platten einem zweiten Härteprozess bei 230°C für ca. 20-40 Minuten unterzogen, bei welchem das zweite Vernetzer reagieren kann.

Aufgabe der vorliegenden Erfindung ist es daher, ein Verfahren zum Beschichten eines Halbzeugs zu schaffen, welches eine verbesserte Korrosionsschutzperformance des beschichteten Halbzeugs ermöglicht. Eine weitere Aufgabe der Erfindung ist es, ein Halbzeug mit einer verbesserten Korrosionsschutzperformance bereitzustellen sowie ein Gemisch zu schaffen, welches ein Beschichten eines Halbzeugs zum Schutz vor Korrosion mit verringerten Produktionskosten ermöglicht.

Die Aufgaben werden erfindungsgemäß durch ein Verfahren mit den Merkmalen des Patentanspruchs 1, ein Halbzeug gemäß Patentanspruch 8 sowie ein Gemisch gemäß Patentanspruch 9 gelöst. Vorteilhafte Ausgestaltungen mit zweckmäßigen und nicht-trivialen Weiterbildungen sind in de jeweiligen Untcransprüchen angegeben, wobei vorteilhafte Ausgestaltungen des Verfahrens - soweit anwendbar - als vorteilhafte Ausgestaltungen des Halbzeugs bzw. des Gemischs anzusehen sind und umgekehrt.

Erfindungsgemäß umfasst das Verfahren zum Beschichten eines Halbzeugs zumindest die Schritte a.) Aufbringen des Gemischs auf das Halbzeug, b.) Teilhärten des Gemischs für eine erste Zeitdauer bei einer ersten Temperatur, c.) Abbrechen des Teilhärtens und d.) Aushärten des Gemischs für eine zweite Zeitdauer bei einer sweiten Temperatur, wobei die zweite Zeitdauer länger als die erste Zeitdauer und/oder die zweite Temperatur höher als die erste Temperatur ist. Mit anderen Worten wird das Gemisch nach dem Aufbringen auf das Halbzeug in den Schritten b.) und c.) lediglich teilvernetzt und damit der Übergang des Gemischs in einen höhermolekularen Zustand bewusst. gesteuert. Durch das Unterbrechen des Vernetzen in Schritt c.) verläuft das Aushärten des Gemischs schrittweise und zunächst unvollständig ab. Dabei kann vorgesehen sein, dass die Schritte b.) und/oder c.) mehrfach hintereinander ausgeführt werden. Der Vorteil des erfindungsgemäßen Verfahrens besteht darin, dass die erste Teilhärtung beispielsweise bei relativ niedriger Temperatur und somit im Rahmen einer Coilbeschichtung erfolgen kann, wodurch eine anvernetzte, griff-feste, flexible und gut umformbare Beschichtung erhalten wird, die aber mindestens die im Rohbau bzw. die bis zum ersten Lackierschritt erforderlichen Eigenschaften und Resistenzen (z. B. Umformbarkeit, Haftung auf dem Halbzeug, Schweißbarkeit, Beständigkeit gegen Reiniger, Phosphatierbarkeit, Lackierbarkeit) aufweist. Das Halbzeug mit der teilgehärteten Beschichtung kann dann erst zu einem dafür geeigneten späteren Zeitpunkt, bevorzugt während oder nach dem Rohbau und bevorzugt im Rahmen eines ohnehin notwendigen weiteren Temperschritts bei höherer Temperatur und/oder längerer Zeitdauer als beim Coil-Coating üblich, die angestrebte Korrosionsschutzperformance insbesondere auch am umgeformten Bauteil erreichen. Dies wird dadurch sichergestellt, dass an beanspruchten und geschädigten Bereichen des Halbzeugs eine selbsttätige Ausheilung durch eine immer noch vorhandene Fließfähigkeit des teilgehärteten Gemischs möglich ist. Das Aushärten in Schritt d.) und damit der Endzustand der Beschichtung erfolgt somit nach dem Ausheilen der beschädigten Bereiche, so dass eine besonders hohe Korrosionsschutzperformance gewährleistet ist. Das Teilhärten und das Aushärten kann beide Male thermisch bewerkstelligt werden, denkbar ist jedoch auch ein Teilhärten durch Bestrahlen mit IR- oder UV-Strahlung und ein anschließendes thermisches Aushärten.

Ein weiterer Aspekt der Erfindung betrifft ein Gemisch, insbesondere einen Lack, zum Beschichten von Halbzeugen, welches folgende vernetzbaren Komponenten umfasst:
- ein Phenolharz;
- ein Epoxidharz;.
- ein geblocktes Isocyanat;
- einen Reaktivverdünner,
wobei das Gemisch durch Vernetzen der Komponenten aus einem fließfähigen in einen ausgehärteten Zustand zu überführen ist. Ein derartiges, als Low-Cure-Lack ausgebildetes Gemisch bietet den Vorteil, dass es eine gezielte und stufenweise Vernetzung erlaubt und damit eine Korrosionsschutzbeschichtung eines Halbzeugs mit verringerten Produktionskosten ermöglicht. Die Ausgestaltung als Low-Cure-Lack ist neben ökologischen Vorteilen aus zwei weiteren Gründen von Bedeutung, nämlich dass damit die Verarbeitung von bestimmten Stahlsorten, den Bake-Hardening-Stählen, möglich wird und dass die Produktionsgeschwindigkeit erhöht werden kann. Dazu ist erforderlich, dass unter Coil-Coating-Bedingungen (typische Trocknungszeit 30s, danach Abschrecken in Wasser) bei der Trocknung eine Objekttemperatur von etwa 170°C nicht überschritten und trotzdem die notwendige Performance der Beschichtung erreicht wird. Im Gegensatz zum Stand der Technik kann vorteilhafterweise auf das Beimischen von Katalysatoren verzichtet werden, wodurch das Gemisch eine hohe Lagerstabilität aufweist. Dies schließt jedoch nicht aus, dass gegebenenfalls dennoch Katalysatoren oder Reaktionsbeschleuniger vergesehen sein können. Durch eine hohe Lagerstabilität kann der Rohstoffverbrauch begrenzt und weitere Kostensenkungeri erzielt werden. Durch das erfindungsgemäße Gemisch kann demnach sowohl die gewünschte Anfangs- als auch Endperformance der Beschichtung erzielt werden. Zusätzlich kann eine ausreichende Lagerstabilität in Lieferform und nach Gebrauch durch den bevorzugten Verzicht von Katalysatoren oder Beschleunigern realisiert werden.

Weitere Vorteile, Merkmale und Einzelheiten der Erfindung ergeben sich aus den nachfolgenden Beschreibungen einzelner Ausführungsbeispiele sowie anhand der zeichnungen. Dabei zeigen:
- Fig. 1: eine schematische Schnittansicht eines mit einem aushärtbaren Gemisch beschichteten Halbzeugs;
- Fig. 2: eine schematische Darstellung einer Reaktion zwischen zwei Phenolharzkomponenten eines Gemischs gemäß Fig. 1;
- Fig. 3: eine schematische Darstellung einer Reaktion zwischen einer Phenolharz- und einer Epoxidharzkomponente des Gemischs gemäß Fig. 1 und 2;
- Fig. 4: eine schematische Darstellung einer Reaktion zwischen einer Phenolharzkomponente und einem geblockten Isocyanat des Gemischs gemäß Fig. 1 bis 3;
- Fig. 5: eine schematische Darstellung einer Reaktion zwischen einem Reaktionsprodukt gemäß Fig. 3 und einem geblockten Isocyanat des Gemischs gemäß Fig. 1 bis 4;

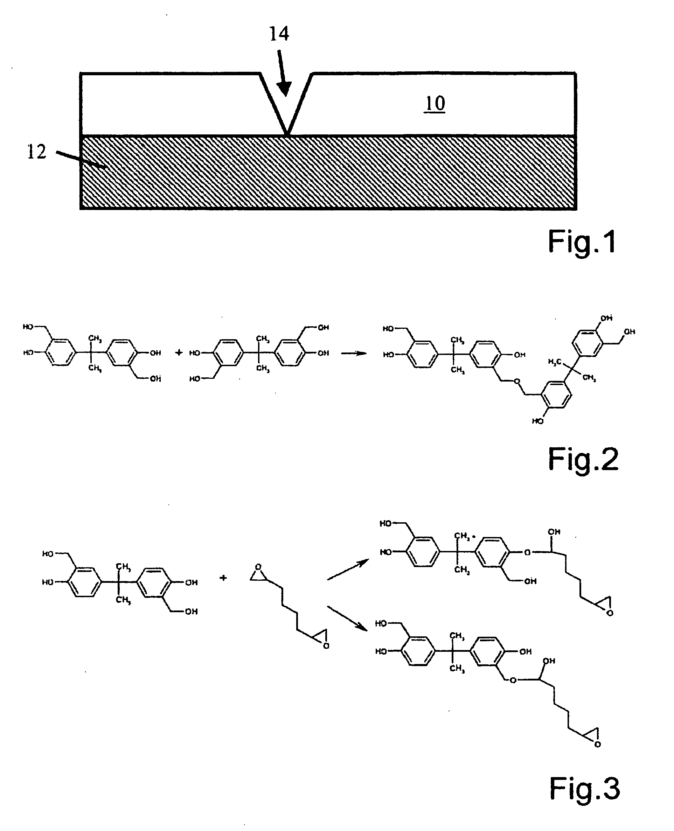

Fig. 1 zeigt eine schematische Schnittansicht eines mit einem aushärtbaren Gemisch 10 beschichteten Halbzeugs 12. Das Gemisch 10 umfasst dabei mehrere miteinander vernetzbare chemische Komponenten, welche im Folgenden näher erläutert werden. Nach dem Aufbringen des zunächst fließfähigen Gemischs 10 auf das Halbzeug 12 mit Hilfe eines Beschichtungsverfahrens wird durch Erhitzen oder Bestrahlen mit Infrarot oder UV-Strahlung eine Teilvernetzung der Komponenten und damit eine Teilhärtung des Gemischs 10 erreicht. Nach einer vorbestimmten Zeitdauer wird das Teilhärten beispielsweise durch Abschrecken des Gemischs 10 mit Wasser abgebrochen. Das beschichtete Halbzeug 12 kann dann weiteren Verarbeitungsverfahren wie beispielsweise Umformen, Schweißen oder Fügen unterworfen werden. Dies führt jedoch häufig zu einer Beschädigung 14 der Beschichtung und damit zu einer Beeinträchtigung der Korrosionsschutzperformance. Aufgrund des nach wie vor fließfähigen Zustands des Gemischs 10 kann dieses jedoch die Beschädigung 14 durch Nachfließen selbständig reparieren. Anschließend kann ein endgültiges Aushärten des Gemischs 10 erfolgen und das Halbzeug 12 optimal gegen Korrosion geschützt werden. Beispielsweise kann das Teilhärten in Schritt b.) für 30s bei etwa 170°C erfolgen und durch anschließendes Abschrecken mit Wasser in Schritt c.) gestoppt werde. Dies bietet den Vorteil, dass im Vergleich zu bisherigen Beschichtungsverfahren die Produktionsgeschwindigkeit bei der Bandbeschichtung erhöht und damit die Produktionskosten gesenkt werden. Zudem erlaubt das Teilhärten bei 170°C die Verarbeitung von Bake-Hardening-Stählen, welche bei den ansonsten üblichen Temperaturen von 200-250°C durch Einlagerung von Stickstoff aushärten würden. Werden keine Bake-Hardening-Stähle verwendet, kann jedoch auch ein Teilhärten bei höheren Temperaturen vorgesehen sein. Das Aushärten in Schritt d.) kann - beispielsweise im Rahmen eines ohnehin erforderlichen Temperschritts während einer Weiterverarbeitung des beschichteten Halbzeugs 12 - dann bei 170-180°C bzw. für etwa 30 Minuten erfolgen. Langsamer versetzende Gemische 10 können entsprechend höher oder länger erhitzt werden, wobei eine möglichst hohe Durchlaufzeit und Anlagenauslastung vorgesehen ist.

Das Gemisch 10 umfasst dabei zunächst als vernetzbare Komponenten ein Phenolharz, ein Epoxidharz, ein geblocktes Isocyanat sowie einen Reaktivverdünner. Zusätzlich können weitere Komponenten vorgesehen sein, welche in den folgenden Ausführungsbeispielen näher ausgeführt werden. Als Orientierung für die erzielbare Korrosionsschutzperformance dient das beim VDEh erhältliche Referenzmaterial. Dieses besteht aus beidseitig mit ca. 7,5 µm Zink (ZE75/75) elektrolytisch beschichtetem DC 04 Stahlmaterial, das anschließend im industriellen Beschichtungsverfahren zuerst beidseitig mit einer chromfreien Vorbehandlung und dann mit einer genau 3,6 µm starken Korrosionsschutzprimerschicht, bestehend aus Granocoat ZE (Fa. Henkel), beschichtet wurde. Aus diesem Referenzcoil gefertigten Flanschproben wird zugeschrieben, dass sie im Flanschbereich 10 Wochen Wechseltest nach VDA 621-415 unbeschadet ohne Rotrost überstehen, wobei Weißrost erlaubt ist. Auf diese Weise sollen Unterschiede der einzelnen Prüfkammern und dergleichen eliminiert werden. Diese Korrosionsschutzperformance entspricht per Definition jener der 1. Generation. Die Korrosionsforderungen für die 2. Generation sind doppelt so hoch, betragen also 20 Wochen Prüfzeit ohne Rotrost bei gleicher Schichtstärke. Wenn nun in einer Prüfkammer die aus dem Referenzcoil gefertigten Referenzflanschproben bereits nach 6 Wochen Rotrost zeigen würden, wird diesem Ergebnis die Performance der 1. Generation zugewiesen und müsste eine gleichzeitig geprüfte neue Primerbeschichtung mit gleicher Schichtstärke lediglich 9 bzw. 12 Wochen Prüfzeit ohne Auftreten von Rotrost im Flanschbereich durchlaufen, um die Performance der 1,5. bzw. 2. Generation nachweisen zu können. Die anderen Anforderungen sind Mindestanforderungen, die erfüllt werden müssen, beim Punktschweißen sind das beispielsweise ein Schweißbereich von mindestens 1,3 kA, eine Elektrodenstandmenge von mindestens 800 Punkten und Spritzerfreiheit. Für Kleben, Umformen, Haftung etc. gibt es ebenfalls Vorgaben, die nicht unterschritten werden dürfen. Insofern genügt die Aussage, welche Korrosionsschutzperformance erreicht wurde und die belastbare Aussage, dass alle anderen Anforderungen mindestens erfüllt oder im positiven Sinn übertreffen worden sind.

Dickere Schichten als die vorgegebenen 3,6 µm führen teilweise zu einer besseren Korrosionsschutzperformance. Dem steht allerdings ein höherer Material- und Kostenaufwand entgegen und auch hier müssen die anderen Performancevorgaben mindestens erfüllt werden. Wenn auch noch die Kostenfrage geklärt ist, würde nichts dagegen sprechen, ein Material ggf. dicker zu beschichten. Um es allerdings performancemässig einordnen zu können, ist trotzdem die Beschichtung mit einer Schichtstärke von 3,6 µm angeraten. Alternativ sind Beschichtungen mit einer Schichtstärke im Bereich von 1-2,5 µm denkbar, die aber mindestens die Performance der 1. Generation haben sollen. Hier werden die Korrosionsschutzperformance der 3,6 µm Schicht des Referenzcoils direkt mit einer 1,8 µm starken Beschichtung der Neuentwicklung wie oben angegeben verglichen. Der Grund für diese Maßnahme ist die Kostenersparnis durch einen geringeren Materialeinsatz.

Tabelle 1 beschreibt eine Rezeptur des Gemischs 10 zum Beschichten des Halbzeugs 12 gemäß einem ersten Ausführungsbeispiel, wobei die erreichte Korrosionsschutzperformance bei halbierter Schichtstärke und reduziertem Preis einem Lack aus dem Stand der Technik (1. Generation) entspricht.

**Tabelle 1: Rezeptur eines Gemischs zum Beschichten von Halbzeugen gemäß einem ersten Ausführungsbeispiel (LLC42)**

| | |
|---|---|
| Phenolharz 55%ig | 4,30 g |
| Epoxidharz | 2,70 g |
| Geblocktes Isocyanat 75%ig | 14,75 g |
| Reaktivverdünner | 2,59 g |
| Zink 1 | 18,72 g |
| Wolfram | 3,74 g |
| Korrosionsschutzpigment 1 | 6,55 g |
| Korrosionsschutzpigment 3 | 4,68 g |
| Inhibitor 1 | 0,94 g |
| Inhibitor 2 | 0,94 g |
| Verdicker | 1,87 g |
| Rheologieadditiv | 0,15 g |
| Dispergieradditiv | 0,26 g |
| Verlaufsadditiv | 0,20 g |
| Lösungsmittel | 37,62 g |
| Summe: | 100 g |
| | |
| Festkörpergehalt | 55,3% |
| Schichtdicke | 1,8 µm |
| Schweißergebnis | gut |
| Korrosionsergebnis | =>1. Generation |

Auf einen Gewichtsteil der Bindemittelkomponenten kommen 0,3-2 Teile Zinkpulver und 0,1 bis 0,5 Teile Wolfram. Der Festkörpergehalt beträgt zum Beispiel 30 bis 65%.

Tabelle 2 beschreibt eine Rezeptur des Gemischs 10 zum Beschichten des Halbzeugs 12 gemäß einem zweiten Ausführungsbeispiel, wobei die klassische Ausgestaltung einer Zinstaubfarbe der 2. Generation erzielt wird. Die erzielbare Korrosionsschutzperformance ist dabei gegenüber dem Stand der Technik (1. Generation) bei gleicher Schichtstärke und gleichem Preis doppelt so gut.

**Tabelle 2; Rezeptur eines Gemischs zum Beschichten von Halbzeugen gemäß einem zweiten Auaführungsbeispiel (LC90)**

| | |
|---|---|
| Phenolharz 55%ig | 3,50 g |
| Epoxidharz | 1,47 g |
| Geblocktes Isocyanat 75%ig | 12,01 g |
| Reaktivverdünner | 2,11 g |
| Zink 2 | 58,04 g |
| Korrosionsschutzpigment 1 | 3,63 g |
| Korrosionsschutzpigment 3 | 3,63 g |
| Inhibitor 1 | 0,73 g |
| Inhibitor 2 | 0,73 g |
| Verdicker | 0,44 g |
| Rheologieadditiv | 0,15 g |
| Dispergieradditiv | 0,26 g |
| Verlaufsadditiv | 0,20 g |
| Lösungsmittel | 13,13 g |
| Summe: | 100 g |
| | |
| Festkörper | 81,5 % |
| Schichtdicke | 3,6 µm |
| Schweißergebnis | gut |
| Korrosionsergebnis | 2. Generation |

Auf einen Gewichtsteil der Bindemittelkomponenten kommen 2,5-4 Teile Zinkpulver. Der Festkörpergehalt beträgt zum Beispiel 65 bis 92%.

Tabelle 3 beschreibt eine Rezeptur des Gemischs 10 zum Beschichten des Halbzeugs 12 gemäß einem dritten Ausführungsbeispiel, welches einer Zinstaubfarbe der 2. Generation aus dem Stand der Technik entspricht. Die erzielbare Korrosionsschutzperformance entspricht bei gleicher Schichtstärke und gleichem Preis jedoch mehr als dem Doppelten der aus dem Stand der Technik bekannten Gemische.

**Tabelle 3: Rezeptur eines Gemischs zum Beschichten von Halbzeugen gemäß einem dritten Ausführungsbeispiel (LC70)**

| | |
|---|---|
| Phenolharz 55%ig | 4,72 g |
| Epoxidharz | 1,98 g |
| Geblocktes Isocyanat 75%ig | 16,20 g |
| Reaktivverdünner | 2,84 g |
| Zink 1 | 39,14 g |
| Wolfram | 2,61 g |
| Korrosionsschutzpigment 2 25%ig | 24,46 g |
| Korrosionsschutzpigment 3 | 4,89 g |
| Inhibitor 1 | 0,98 g |
| Inhibitor 2 | 0,98 g |
| Verdicker | 0,59 g |
| Rheologieadditiv | 0,15 g |
| Dispergieradditiv | 0,26 g |
| Verlaufsadditiv | 0,20 g |
| Summe: | 100 g |
| | |
| Festkörper | 73,4 % |
| Schichtdicke | 3,6 µm |
| Schweißergebnis | gut |
| Korrosionsergebnis | 2. Generation |

Auf einen Gewichtsteil der Bindemittelkomponenten kommen 1-3 Teile Zinkpulver und 0,1 bis 0,5 Teile Wolfram. Der Festkörpergehalt beträgt zum Beispiel 40 bis 85%.

Für alle Rezepturen hat es sich als vorteilhaft gezeigt, dass der Anteil an Korrosionsschutzpigmenten 2-20%, der Anteil an Inhibitoren 1-10% und der Anteil an sonstigen Additiven 0,2-4% beträgt. Die zugegebenen Mengen an Wolfram können jedoch auch durch Molybdän ersetzt werden, indem man beispielsweise die gleiche Gewichtsmenge oder auch nur bis zu 60% der Gewichtsmenge an Molybdän zusetzt.

Eine Vorteil des Verfahrens des Halbzeugs 12 und des Gemischs 10 besteht in der Berücksichtigung der unterschiedlichen Verarbeitungsverfahren, denen das beschichtete Halbzeug 12 unterworfen werden kann, da zu beachten ist, dass beispielsweise ein Automobil fast ausschließlich aus mehr oder weniger stark umgeformten und gefügten Teilen besteht.

In Fig. 2 bis 5 sind verschiedene zwischen dem Phenolharz, dem Epoxidharz, dem geblockten Isocyanat und entsprechenden Reaktionsprodukten der vorherigen Reaktionen ablaufende Vernetzungsreaktionen schematisch abgebildet.

Fig. 2 zeigt dabei eine intermolekulare Etherbildung zwischen aliphatischen Alkohol-Gruppen zweier, als Phenolharzkomponente dienender Bisphenol-A Moleküle. Anstelle von Bisphenol-A können jedoch auch zusätzliche oder alternative Phenolharzkomponenten vorgesehen sein.

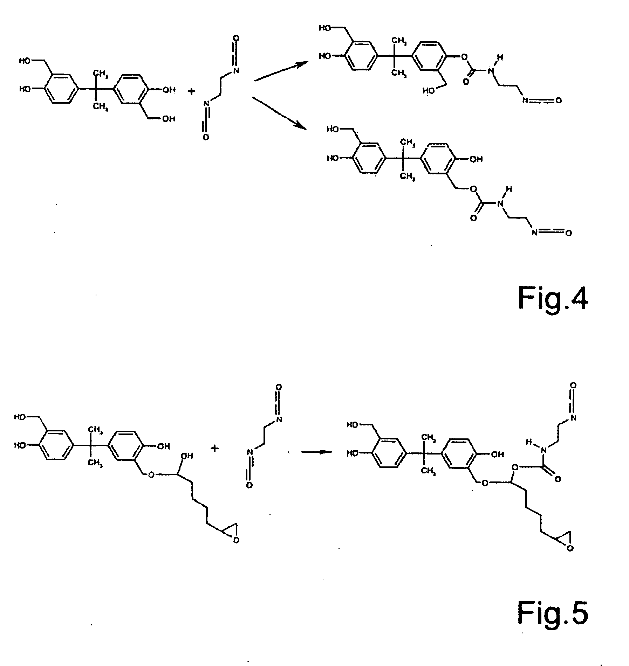

Fig. 3 zeigt mögliche Reaktionen zwischen dem als Phenolharzkomponente dienenden Bisphenol-A und 1,2,7,8-Diepoxioctan, welches als Epoxidharzkomponente dient. Dabei entstehen durch die Ringöffnung des Epoxids neue Alkohol-Gruppen, welche in Folgereaktionen (Fig. 5) eine weitere Vernetzung des Reaktionsprodukts ermöglichen. Die Reaktion kann dabei sowohl über aliphatische als auch über aromatische Alkohol-Gruppen des Bisphenol-A Moleküls erfolgen. Anstelle von 1,2,7,8-Diepoxioctan können auch zusätzliche oder alternative Epoxidharzkomponenten vorgesehen sein.

Fig. 4 zeigt mögliche Reaktionen zwischen der Phenolharzkomponente Bisphenol-A und Dimethylendiisocyanat, welches als Isocyanatkomponente dient und vorliegend entblockt dargestellt ist. Als Blockierungsmittel eignet sich beispielsweise Malonsäurediethylester (nicht abgebildet). Denkbar sind jedoch auch alternative Blockierungsmittel. Anstelle von Dimethylendiisocyanat können alternativ oder zusätzlich auch weitere Isocyanate wie beispielsweise Hexamethylen-diisocyanat (HDI), Methylene-diphenyldiisocyanat (MDI), Toluene-diisocyanat (TDI), Isophorondiisocyanate (IPDI) oder Cyclohexyl-diisocyanat (CHDI) vorgesehen sein.

Fig. 5 zeigt eine mögliche Reaktion zwischen dem Reaktionsprodukt aus der Phenolharzkomponente Bisphenol-A und der Epoxidharzkomponente 1,2,7,8-Diepoxioctan gemäß Fig.3 und der - entblockt dargestellten - Isocyanatkomponente Dimethylendiisocyanat, welche an eine durch die Ringöffnung der Epoxidharzkomponente entstandene Alkohol-Gruppe addiert wird.

Neben den erwähnten vernetzenden Komponenten kann das Gemisch 10 weitere Komponenten umfassen, um die Haltbarkeit und Lagerfähigkeit, die Verarbeitbarkeit und die Korrosionsschutzperformance weiter zu verbessern. Durch eine geeignete Kombination unterschiedlichster Korrosionsschutzmittel, die dem Beschichtungsstoff zugegeben werden und ihre Wirkung sofort oder später entfalten, kann die Korrosionsschutz-Performance unter Erhalt der Schweißbarkeit weiter verbessert werden. Wie bereits erwähnt wird das mit dem Gemisch 10 beschichtete Halbzeug 12 zunächst nur bis zum Erreichen der zur weiteren Verarbeitung notwendigen Performance anvernetzt und frühestens nach der Durchführung relevanter Prozess-Schritte, namentlich nach dem Umformen und vorteilhaft nach dem (Laser- oder Widerstandspunkt-) Schweißen bzw. Kleben bevorzugt ihm Rahmen eines oder mehrerer bevorzugt ohnehin notwendiger Temperschritte weitervernetzt, wobei das unter Wärmeeinwirkung noch erweichbare bzw. kurzzeitig noch fließfähige Material unter völliger oder partieller Ausheilung geschädigter Umformbereiche und/oder teilweise unbeschichteter Bereiche (z. B. Kratzer, in gewissem Umfang auch Schnittkanten) direkt oder in Stufen in seinen endgültigen, ausgehärteten Zustand überführt wird. Hierzu kann zusätzliche eine Bindemittelkomponenten vorgesehen sein, welche ökologisch und ökonomisch vorteilhaft gewählt werden kann.

Dem Gemisch 10 muss dabei im Gegensatz zum Stand der Technik nicht notwendigerweise ein Katalysator oder Beschleuniger zugesetzt werden, um beispielsweise unter Low-Cure-Coil-Coating-Bedingungen (Objekttemperatur ca. 100-180°C, Trocknungszeit ca. 25-40s) zu einer Teilhärtung zu gelangen. Auf diese Weise kann die Korrosionsschutzwirkung des Gemischs 10 insgesamt erhöht, Delamination reduziert und insbesondere in geschädigten oder umgeformten Bereichen sowie in Überlappungsbereichen die Korrosionsanfälligkeit des Halbzeugs 12 zurückgedrängt werden.

Das Gemisch 10 kann dabei sowohl als 1-Komponenten-System (1K) oder 2-Komponenten-System (2K) ausgebildet sein, wobei in beiden Fällen eine ausreichende Lagerstabilität des Gemischs 10 realisierbar ist. Bei 2K-Systemen ist die Lagerstabilität der einzelnen Komponenten meist ausreichend, solange die betroffenen Komponenten getrennt voneinander aufbewahrt werden. Auch der grundsätzlich denkbare Zusatz von Katalysatoren kann die Aushärtebedingungen in gewünschter Weise positiv beeinflussen.

Bei 1K-Systemen sind dagegen bei Low-Cure-Lacken ausreichend reaktive Komponenten sinnvoll, wenn es darum geht, bei niedrigerer Temperatur und/oder kürzerer Zeitdauer eine ausreichend hohe Vernetzung oder Performance der Beschichtung zu erzielen. Unter dem Hintergrund der notwendigen Lagerungen von Flüssiglack, sogar bei unterschiedlichen Bedingungen (Zeit, Temperatur), ist durch das im Stand der Technik gegebene Einwirken von Katalysatoren und/oder Beschleunigern eine längere Lagerung aus unterschiedlichen Gründen oft ausgeschlossen und/oder birgt häufig ein hohes Risiko hinsichtlich der Prozess-Sicherheit. Dies gilt sowohl für das klassische 1K-System, das ggf. mit Katalysator/Beschleuniger angeliefert wird, als auch für die Aufbewahrung wiederzuverwendender Restmengen, wenn der Katalysator/Beschleuniger im Sinne eines 2K-Systems erst vor der Erstanwendung zugeführt wird. Nicht nur aus diesem Grund, sondern teilweise auch hinsichtlich der erzielten Korrosionsschutzwirkung kann mit dem hier vorgestellten Gemisch 10 bzw. Verfahren, welches grundsätzlich ohne den Einsatz von Katalysatoren oder Beschleuniger auskommt, eine deutliche Senkung der Produktionskosten erzielt werden.

Die zwei- oder mehrstufige Aushärtung des Gemischs 10 unterscheidet sich von den bislang bekannten Gemischen und Verfahren dahingehend, dass vorteilhafte Kombinationen nieder- und höhermolekularer Komponenten mit höherer und niedrigerer Reaktivität vorgesehen sind, die eine Vielzahl an unterschiedlichen Vernetzungs- bzw. unterschiedlichen Reaktionsmöglichkeiten aufweisen und bei den durch Vernetzungsreaktionen sogar neue reaktive Gruppen gebildet werden, die ihrerseits weitere Vernetzungsreaktionen eingehen können.

Das Verfahren sieht ebenfalls vor, dass die Vernetzung sowohl thermisch mit unterschiedlichen Temperaturen, als auch über unterschiedliche Trocknungszeiten, als auch energetisch über unterschiedliche Aktivierungsenergien unterschiedlicher Bindemittelkomponenten oder auch Kombinationen daraus, stufenweise durchgeführt werden kann. Dabei steht nach dem Teilvernetzen ein flexibles, anvernetztes Material zur Verfügung, das sich leicht umformen läßt und gut schweißbar ist, aber noch nicht notwendigerweise die endgültige Korrosionsschutzperformance aufweisen muss. Im Rahmen späterer Temperschritte unter Ausheilung beschädigter Regionen wird ein hochmolekulares dichtes Polymernetzwerk mit hoher Korrosionsschutzwirkung und weitreichenden Resistenzen gebildet. Da Katalysatoren und Beschleuniger, typischerweise Zinn- oder Zinksalze sowie tertiäre Amine, nicht zur Durchführung des Verfahrens bzw. bei der Ausgestaltung des Gemischs 10 zwingend erforderlich sind, erfolgt der erste Aushärteschritt beispielsweise unter Coil-Einbrennbedingungen innerhalb von etwa 30s Ofenverweilzeit und bei einer maximalen Objekt-Temperatur von etwa 170°C.

In einer vorteilhaften Ausgestaltung des Gemischs 10 ist als weitere Komponente ein Lösungsmittel vorgesehen, wobei alternativ auch eine Ausgestaltung des Gemischs 10 als High-Solid-Lacksystem vorgesehen sein kann. Durch ein Lösungsmittel oder Lösungsmittelgemisch kann sichergestellt werden, dass die einzelnen Komponenten des Gemischs 10 optimal in Lösung gehalten werden. Weiterhin kann das Lösungsmittel selbst gezielt an den Vernetzungsreaktionen teilnehmen und die Reaktivverdünnerkomponente bilden. Alternativ kann ein für die ablaufenden Reaktionen inertes Lösungsmittel vorgesehen sein, welches vorzugsweise ebenfalls keine Wechselwirkungen mit den zum Aufbringen des Gemischs 10 oder zum Weiterverarbeiten des Halbzeugs 12 verwendeten Geräten (z.B. Rakel, Coaterwalzen etc.) zeigt. Die Verwendung eines Lösungsmittels bietet weiterhin den Vorteil, dass es die einzelnen Komponenten des Gemischs 10 bei ihren Reaktionen unterstützen kann. Unter Coil-Coating-Bedingungen kommt der verwendeten Lösungsmittelkomponente noch eine weitere Bedeutungen zu, da sie zum Einstellen einer für die Verarbeitung des Gemischs 10 geeigneten Verdünnungen (Viskosität, rheologisches Verhalten) verwendet werden kann. Das Lösungsmittel kann dabei in Abhängigkeit seines Siedepunkts bzw. seiner Verdampfungszahl die Beschichtung zum einen beim Trockenen lange genug offen halten, andererseits am Ende der kurzen Trocknungszeit im gewünschten Umfang abdampfen. Es ist dabei zu beachten, dass Art und Menge insbesondere des in der Beschichtung zurückbleibenden Lösungsmittels die Korrosionsschutzwirkung gegebenenfalls beeinflussen kann. Aus ökologischer und ökonomischer Sicht wird die Zugabe von unnötigem Lösungsmittel bevorzugt vermieden, wenn es anschließend unter Energieaufwand lediglich verdampft werden muss, ansonsten aber keine Funktion besitzt. Lösungsmittelzugaben haben sich jedoch als vorteilhaft gezeigt, um Viskositätseinstellungen oder um Einstellungen für (coater-)geeignete Nassschichtdicken für angestrebte (besonders dünne) Trockenschichtdicken vornehmen zu können. Dabei wird der Verdünnungsgrad so niedrig wie möglich gewählt, bevorzugt unter Verwendung eines oder mehrerer Reaktivverdünner, die vorteilhaft in die Beschichtung chemisch eingebaut und damit nicht verdampft werden müssen, wobei zusätzlich meist noch ein weiteres Lösungsmittel oder Lösungsmittelgemisch zur Anwendung kommt, um die oben genannten Anforderungen bestmöglich gewährleisten zu können. Als Lösungsmittelkomponente eignen sich beispielsweise Methoxypropylacetat, Butylacetat, Methoxypropanol, Butanol, Methylethylketon, Methylisobutylketon, Cyclohexanon bzw. deren Stellungsisomere. Es können jedoch auch Mischungen der aufgeführten Lösungsmittel oder andere Lösungsmittel wie Ester und/oder Alkohole und/oder Kohlenwasserstoffe oder dergleichen vorgesehen sein. Geeignete Lösemittel oder Lösemittelgemische zeichnen sich grundsätzlich dadurch aus, dass sie für die jeweils konkrete Ausgestaltung des Gemischs 10 gute Löseeigenschaften besitzen, einen geeigneten Siedepunkt und eine geeignete Verdampfungszahl aufweisen und dass sie beispielsweise unter Coil-Coating-Bedingungen weder zu schnell noch zu langsam verdampfen und keine unnötigen Lösungsmittelrückstände im teilgehärteten Gemisch 10 verbleiben.

Bei dem Gemisch 10 bzw. der Beschichtung handelt es sich um eine funktionale Beschichtung. Das Einbringen bestimmter Funktionen erfolgt dabei bevorzugt aber nicht ausschließlich über chemische Verankerungen, bevorzugt über die Komponenten, die dem Bindemittel zugerechnet werden. Beispielsweise kann im Rahmen der Vernetzung eine intrinsische Flexibilisierung, Hydrophobierung und die Einstellung der Alkalibeständigkeit bewerkstelligt werden. Weiterhin kann durch Einbau geeigneter Kontakt- oder Haftgruppen eine bestimmte Anordnung oder Ausrichtung (Selbstorientierung) von bestimmten Molekülen oder Molekülgruppen erreicht werden. Zusätzlich werden durch Einbringen weiterer Stoffe in die Polymermatrix, die nicht chemisch gebunden werden, weitere Funktionen in die Beschichtung eingebracht.

Es kann weiterhin vorgesehen sein, dem Gemisch 10 zusätzliche Korrosionsschutzmittel beizufügen. Hier kommen z. B. Inhibitoren, Korrosionsschutzpigmente und/oder Hydrophobierungsmittel in Frage. Inhibitoren sind Substanzen, die schon in kleinen Mengen angewendet in der Lage sind, den Korrosionsangriff auf Metall zu vermindern, indem Korrosionsreaktionen zumindest eine gewisse Zeit lang verlangsamt oder sogar weitgehend verhindert werden. Dies kann auf ganz unterschiedliche Weise geschehen, beispielsweise durch Verbesserung der Haftung, durch Reduzierung der Porosität, durch Verminderung der Durchlässigkeit von Beschichtungen und/oder durch Potentialverschiebungen, die mit einem Inhibierungseffekt verbunden sind, wobei bevorzugte Materialien die Eigenschaft besitzen, auf mehrere Weisen gleichzeitig einwirken zu können. Entsprechendes gilt für Korrosionsschutzpigmente, die in Form von Festkörpern eingesetzt werden. Auch hier gibt es Materialien mir rein physikalischer Barrierewirkung wie z. B. Eisenglimmer und reaktive Materialien, die chemisch oder elektrochemisch wirken wie z. B. Zink (Opferanode), wobei dort entstehendes Reaktionsprodukt wieder eine physikalische Wirkung haben kann, durch seine Fähigkeit, entstandene Defekte mechanisch zu verschließen. Bei Verwendung von Zinkflakes ist die Möglichkeit gegeben, die genannten Wirkungsweisen hinsichtlich Korrosionsschutz und elektrische Leitfähigkeit durch nur ein Produkt zu bewerkstelligen. Eine weitere Möglichkeit, einen umfassenden Korrosionsschutz zu gewährleisten, ist eine Hydrophobierung, die dazu dient, die Beschichtung oberflächlich (Wachse) und/oder auch intrinsisch wasserabweisend auszugestalten. Durch diese Maßnahme wird der für die Korrosion notwendige Wasserdurchtritt erschwert. Da das Gemisch 10 u. a. auch schweißbar ausgebildet sein kann, ist es vorteilhaft, dass die Beschichtung eine relative gute elektrische Leitfähigkeit aufweist. Daher können bei der Ausgestaltung bevorzugt multifunktionale Korrosionsschutzmittel verwendet werden, die neben ihrer eigentlichen noch weitere erwünschte Funktionen besitzen, also z. B. zusätzlich eine gewisse Eigenleitfähigkeit aufweisen bzw. das Widerstandspunktschweißen nicht oder nur vertretbar gering stören.

In weiterer Ausgestaltung hat es sich als vorteilhaft gezeigt, dass das Gemisch 10 eine hohe elektrische Leitfähigkeit aufweist. Dies kann erreicht werden durch den Zusatz von leitfähigen Komponenten. Der Einsatz von ausreichend leitfähigem Beschichtungsstoff könnte dabei theoretisch diese Anforderung erfüllen. In der Regel wird man aber elektrisch leitfähige Feststoffe (Leitpigmente) zusetzen, die in die Polymermatrix eingebettet werden. Besonders vorteilhaft ist dabei die Verwendung von multifunktionalem Zink als Leitpigment, das für die durchzuführenden Umformprozesse nicht Werkzeug verschleißend und ausreichend duktil ist und damit ausheilend auf Umformbeschädigungen wirkt und in mehrfacher Hinsicht Korrosionsschutz bietet. Darüber hinaus spielt der zur Einstellung der Schweißbarkeit oft hohe Füllgrad eine große Rolle, da dadurch der kathodische Schutz erhöht werden kann. Die Performance des Gemischs 10 kann durch geeignete Wahl von Partikelgröße, Partikelgrößenverteilung, homogener Verteilung der Partikel im Gemisch 10 (Dispergierbarkeit, Stabilisierung) sowie die Reinheit des Zinks optimal auf den jeweiligen Verwendungszweck abgestimmt werden. Dabei hat es sich weiterhin als vorteilhaft gezeigt, metallisches Zink mit enger Partikelgrößenverteilung und einer mittleren Partikelgröße, die im Bereich der angestrebten Trockenschichtdicke liegt zu verwenden, wobei ein geringer Anteil an Partikeln aus der Schicht herausragen kann. Alternativ stehen je nach Anwendung andere Leitpigmente oder Mischungen daraus zur Verfügung, ggf. zusätzlich in Kombination mit Zink. Die erfindungsgemäß bevorzugten Ausgestaltungen sind neben einer Zinkpigmentierung daher Mischungen aus Zink mit anderen Leitpigmenten, bevorzugt Molybdän und/oder Wolfram, wobei diese Komponenten bevorzugt ebenfalls in enger Verteilung jedoch mit deutlich niedrigerer mittlerer Partikelgröße als Zink angewendet werden. Während beispielsweise bei der erfindungsgemäßen zinkpigmentierten Beschichtung das Bindemittel/Leitfähigkeitspigment Verhältnis im Bereich von 1:4 Gewichtsteilen liegen kann, kann es bei der modifizierten und alternativ pigmentierten Ausgestaltung auf etwa 1:0,5 bis 1:3 gesenkt werden. Dies hat den Vorteil, dass ein eher geschlossener Lackfilm erzeugt wird, der bei niedrigen Rohstoffkosten eine Außenhauttauglichkeit besitzt. Dadurch kann durch Reduktion der Schichtstärke und insgesamt vermindertem Rohstoffeinsatz bei gleicher Korrosionsschutzperformance eine kostengünstige und/oder außenhauttaugliche Ausgestaltung mit hervorragender Schweißeignung bereitgestellt werden. Als Leitpigmente können grundsätzlich alle ausreichend leitfähigen Substanzen wie Zn, A1, Mo, W, MoB₂, Fe₂B, Fe₂P oder geeignete Legierungen verwendet werden. Insbesondere können auch Zn oder A1 enthaltende Legierungen oder Mischungen, Agglomerate, Aggregate, Verbundwerkstoffe und/oder daraus auf Trägermaterialien aufgebrachte Materialien oder beliebige Mischungen daraus vorgesehen sein, die zudem eine unterschiedliche Korngrößenverteilung aufweisen können.

Weiterhin kann vorgesehen sein, dass dem Gemisch 10 Inhibitoren, Verdicker, Rheologieadditive, Dispergieradditive oder Verlaufsadditive zugesetzt werden, um die Lagerfähigkeit und Haltbarkeit des fließfähigen Gemischs 10 zu verbessern. Die Haltbarkeit wird beispielsweise durch chemische Alterung von einzelnen Komponenten sowie durch physikalische Effekte beeinflusst. Durch das Hinzufügen einer oder mehrere der oben angegebenen Komponenten zum Gemisch 10 kann ein langer Verarbeitungszeitraum (Topfzeit) sowie eine reproduzierbarer Qualität (Performance) des ausgehärteten Gemischs 10 über die gesamten Topfzeit gewährleistet werden. Wie schon erwähnt, kann das Gemisch 10 bei der Lagerung auch einer physikalischen Alterung unterworfen sein, beispielsweise bedingt durch Sedimentation von festen Pigmentkomponenten. Auch dies kann durch den Zusatz einer derartigen Komponente verhindert werden, so dass ein homogenes und fein disperses Gemisch 10 erhalten wird, das sich störungsfrei beschichten lässt. Um bestimmte Eigenschaften des fließfähigen Gemischs 10 auch im ausgehärteten Zustand einzustellen, sind entsprechende Additive vorgesehen. Hier sind an erster Stelle Netz- und Dispergieradditive zu nennen, die dazu dienen, Pigmentagglomerate zu zerteilen und die neu entstandenen Oberflächen zu benetzen. Anschließend wird dieser Zustand stabilisiert, also beispielsweise durch elektrostatische Abstoßung erhalten und damit Reagglomeration dauerhaft verhindert. Weiterhin können Antiabsetzadditive vorgesehen sein, die das Absetzen insbesondere von schweren Pigmenten als festen Bodensatz verhindern oder deren Wiederaufrührbarkeit gewährleisten. Diese Additive, von welchen es verschiedene Realisierungsmöglichkeiten gibt, können die Pigmente schon in geringen Konzentrationen (hochohmig) überziehen und/oder können sich auf der Oberfläche der Beschichtung anreichern. Beispielesweise können dafür bestimmte Wachse verwendet werden, die beim Schweißen abschmelzen und zusätzlich aufgrund ihrer hydrophobierenden Wirkung dem Korrosionsschutz förderlich sind. Weiterhin können Additive, die die Rheologie des Flüssiglacks beeinflussen, indem sie stabilisierende Netzstrukturen aufbauen, als Antiabsetzmittel angewendet werden. Bei besonders dünnflüssigen Formulierungen kann es - um zu extreme Einstellbedingungen am Coater zu verhindern - vorteilhaft sein, geeignete Verdicker zu verwenden. Weiterhin kann es vorteilhaft sein, Additive zu verwenden, die die Beschichtungsqualität herstellen oder verbessern, wie beispielsweise Substratbenetzer, Gleit- und Verlaufsadditive, Entschäumer oder Entlüfter. Dabei können unterschiedliche Additive vorteilhaft miteinander kombiniert und in Summe ein optimaler Korrosionsschutz erzielt werden. Auch hat sich als vorteilhaft gezeigt, dass Rheologieadditive, die mit einer zeitlichen Verzögerung das charakteristische Netzwerk ausbilden, auch noch die gewünschte Antiabsetzwirkung günstig beeinflussen können und gleichzeitig das Gemisch 10 auf einem coater besser verarbeitet werden kann.

Weiterhin hat es sich als vorteilhaft gezeigt, dass die Aushärtung des Gemischs 10 gemäß Schritt d.) im Rahmen einer KT-Lackierung in der Automobilfabrik stattfindet. Um eine optimale Korrosionsschutzperformance erzielen zu können, hat es sich dabei als vorteilhaft gezeigt, dass das Aushärten bervorzugt schon vor den Lackierprozessen im Automobilwerk stattfindet und beispielsweise auf den Rohbau oder im Rahmen einer Klebertrocknung vorverlegt wird.

Dabei ist jedoch zu betonen, dass das Verfahren bzw. das Halbzeug 12 bzw. das Gemisch 10 nicht als auf den Automobilbereich oder das Coil-Coating beschränkt anzusehen sind. Es kann demnach zwar bevorzugt im Automobilbereich, bevorzugt aber nicht zwingend dort wo Coilware und/oder bevorzugt aber nicht zwingend dort, wo plane Teile ganz oder teilweise beschichtet werden sollen, verwendet werden. Ebenso ist denkbar, dass nur einzelne Teile oder bestimmte Bereiche von Teilen vorbeschichtet werden oder in der Fabrik oder von einem Zulieferer beschichtet werden. Als Beschichtungsverfahren sind neben der Walzbeschichtung dann auch andere Beschichtungsverfahren wie Drucken oder Spritzen vorstellbar. Ebenso kann auch das Coil Coating auf die weitere Lackierung ausgedehnt werden bzw. können Vorder- und Rückseite auch unterschiedlich beschichtet werden. Da die Pigmentierung mit Leitpigment nur erforderlich ist, wenn punktgeschweißt werden soll, kann darauf bei Anwendungsfällen, bei denen das nicht der Fall ist, vorteilhaft verzichtet werden. Im Bedarfsfall kann dem Gemisch 10 auch ein billigerer Ersatzstoff (Füllstoff) oder ein korrosionsschutzmäßig wirksamer Ersatzstoff oder ein Korrosionsschutzpigment oder Mischungen daraus zugegeben werden.

Das Gemisch 10 kann daher alternativ eine Kombination geeigneter und ausreichend reaktiver Bindemittelkomponenten mit unterschiedlichen Reaktionsmöglichkeiten umfassen. Dies kann beispielsweise durch Mischung unterschiedlicher Bindemittel und/oder unterschiedlich funktionalisierter Bindemittel und/oder Kombinationen daraus realisiert werden, wobei wie bereits erwähnt bevorzugt phenolische, epoxifunktionalisierte und/oder isocyanathaltige und/oder daraus abgeleitete Komponenten vorgesehen sind, so dass das Gemisch 10 auch ohne Verwendung eines oder mehrerer Katalysatoren und/oder Beschleunigers die geforderten Low-Cure-Eigenschaften aufweist.

### Bezugszeichenliste

- 10: Gemisch
- 12: Halbzeug
- 14: Beschädigung

## Patentansprüche

1. Verfahren zum Beschichten eines Halbzeugs (12), insbesondere eines Bandblechs für den Kraftfahrzeugbau, mit einem Gemisch (10), insbesondere einem Lack, welches miteinander vernetzbare chemische Komponenten umfasst und durch chemisches Vernetzen dieser Komponenten aus einem fließfähigen in einen ausgehärteten Zustand überführbar ist, folgende Schritte umfassend:
a.) Aufbringen des Gemischs (10) auf das Halbzeug (12);
b.) Teilhärten des Gemischs (10) für eine erste Zeitdauer bei einer ersten Temperatur;
c.) Abbrechen des Teilhärtens;
d.) Aushärten des Gemischs (10) für eine zweite Zeitdauer bei einer zweiten Temperatur, wobei die zweite Zeitdauer länger als die erste Zeitdauer und/oder die zweite Temperatur höher als die erste Temperatur ist.

2. Verfahren nach Anspruch 1,
**dadurch gekennzeichnet,**
**dass** in Schritt a.) ein Beschichtungsverfahren, insbesondere ein Walzenbeschichtungsverfahren und/oder ein Druckbeschichtungsverfahren und/oder ein Spritzlackierverfahren verwendet wird.

3. Verfahren nach einem der vorhergehenden Ansprüche,
**dadurch gekennzeichnet,**
**dass** das Gemisch (10) vor Schritt b.) zumindest teilweise getrocknet wird.

4. Verfahren nach einem der vorhergehenden Ansprüche,
**dadurch gekennzeichnet,**
**dass** das Gemisch (10) in Schritt b.) durch Erhitzen und/oder durch Bestrahlen mit Infrarot- und/oder Ultraviolettstrahlung teilgehärtet wird.

5. Verfahren nach einem der vorhergehenden Ansprüche,
**dadurch gekennzeichnet,**
**dass** das Teilhärten in Schritt c.) durch Abschrecken des Gemischs (10) mit einer Flüssigkeit, insbesondere Wasser, abgebrochen wird.

6. Verfahren nach einem der vorhergehenden Ansprüche,
**dadurch gekennzeichnet,**
**dass** das teilgehärtete Gemisch (10) nach Schritt c.) in einem zusätzlichen Schritt e.) mit einem Öl, insbesondere einem Ziehöl beschichtet wird.

7. Verfahren nach einem der vorhergehenden Ansprüche,
**dadurch gekennzeichnet,**
**dass** das Halbzeug (12) nach Schritt c.) und/oder gegebenenfalls e.) in einem zusätzlichen Schritt f.) umgeformt, insbesondere tiefgezogen, und/oder getrennt, insbesondere geschnitten, und/oder gefügt, insbesondere geklebt und/oder geschweißt, und/oder beschichtet, insbesondere lackiert, wird.

8. Verfahren nach einem der Ansprüche 1 bis 7,
**dadurch gekennzeichnet, dass**
ein Gemisch (10), insbesondere Lack, zum Beschichten von Halbzeugen (12), verwendet wird, welches folgende vernetzbaren Komponenten umfasst:
- ein Phenolharz;
- ein Epoxidharz;
- ein geblocktes Isocyanat;
- einen Reaktivverdünner,
wobei das Gemisch (10) durch Vernetzen der Komponenten aus einem fließfähigen in einen ausgehärteten Zustand zu überführen ist.

9. Verfahren nach Anspruch 8,
**dadurch gekennzeichnet, dass**
ein Gemisch (10) folgender Zusammensetzung verwendet wird:
- Phenolharz (55%ig) zwischen 3% und 5% (w/w);
- Epoxidharz zwischen 1% und 3% (w/w);
- Geblocktes Isocyanat (75%ig) zwischen 11% und 17% (w/w);
- Reaktivverdünner zwischen 1,5% und 3% (w/w).

10. Verfahren nach Anspruch 8 oder 9,
**dadurch gekennzeichnet,**
**dass** als Bestandteil des Gemischs (10) zusätzlich ein Metall-Pigment und/oder ein Korrosionsschutzpigment und/oder ein Inhibitor und/oder ein Verdicker und/oder Rheologieadditiv und/oder ein Dispergieradditiv und/oder ein Verlaufsadditiv und/oder ein Lösungsmittel vorgesehen ist.

11. Halbzeug (12), insbesondere Bandblech für den Kraftfahrzeugbau,
**dadurch gekennzeichnet,**
**dass** es mittels eines Verfahrens nach einem der Ansprüche 1 bis 10 hergestellt ist.

## Claims

1. Method for coating a semi-finished product (12), in particular a wide strip for automotive engineering, with a mixture (10), in particular a paint, which comprises mutually crosslinkable chemical components and can be converted from a fluid state to a cured state by chemical crosslinking of these components, comprising the following steps:
a.) the application of the mixture (10) to the semi-finished product (12);
b.) the partial curing of the mixture (10) for a first period at a first temperature;
c.) the stopping of the partial cure;
d.) the curing of the mixture (10) for a further period at a second temperature, the second period being longer than the first period and/or the second temperature being higher than the first temperature.

2. Method according to claim 1,
**characterised in that**
a coating method, in particular a roller coating method and/or a pressure coating method and/or a spray painting method, is/are used in step a.).

3. Method according to any of the preceding claims,
**characterised in that**
the mixture (10) is at least partially dried before step b.) is carried out.

4. Method according to any of the preceding claims,
**characterised in that**
the mixture (10) is partially cured in step b.) by heating and/or by irradiation with infrared and/or ultraviolet rays.

5. Method according to any of the preceding claims,
**characterised in that**
the partial curing process is stopped in step c.) by quenching the mixture (10) with a liquid, in particular water.

6. Method according to any of the preceding claims,
**characterised in that**
following step c.), the partially cured mixture (10) is coated with an oil, in particular a drawing oil, in an additional step e.).

7. Method according to any of the preceding claims,
**characterised in that**
following step c.) and/or step e.) if applicable, the semi-finished product (12) is worked, in particular deep-drawn, and/or divided, in particular cut, and/or joined, in particular bonded and/or welded, and/or coated, in particular painted, in an additional step f.).

8. Method according to any of claims 1 to 7,
**characterised in that**
a mixture (10), in particular a paint, comprising the following crosslinkable components is used to coat the semi-finished products:
- a phenolic resin;
- an epoxy resin;
- a blocked isocyanate;
- a reactive thinner,
wherein the mixture (10) can be converted from a fluid state to a cured state by crosslinking the components.

9. Method according to claim 8,
**characterised in that**
a mixture (10) of the following composition is used:
- phenolic resin (55%) between 3% and 5% (w/w);
- epoxy resin between 1% and 3% (w/w);
- blocked isocyanate (75%) between 11 % and 17% (w/w);
- reactive thinner between 1.5% and 3% (w/w).

10. Method according to claim 8 or 9,
**characterised in that**
in addition, a metal pigment and/or an anti-corrosion pigment and/or an inhibitor and/or a thickening agent and/or a rheological additive and/or a dispersion additive and/or a flow-control additive and/or a solvent is/are provided as a component of the mixture (10).

11. Semi-finished product, in particular wide strip, for automotive engineering, **characterised in that**
it is produced using a method according to any of claims 1 to 10.

## Revendications

1. Procédé de revêtement d'un produit semi-fini (12), en particulier d'une large bande pour la construction de véhicules automobiles au moyen d'un mélange (10), notamment d'une peinture qui comprend des composants chimiques réticulables et que l'on peut faire passer, par réticulation chimique desdits composants, d'un état fluide à un état durci, comprenant les étapes suivantes :
a) Application du mélange (10) sur le produit semi-fini (12) ;
b) Durcissement partiel du mélange (10) à une première température, pendant une première période de temps,
c) Interruption du durcissement partiel,
d) Durcissement du mélange (10) à une seconde température, pendant une seconde période de temps, cette seconde période étant plus longue que la première et/ou la seconde température étant plus élevée que la première.

2. Procédé selon la revendication 1, **caractérisé en ce qu'**à l'étape a) un procédé de revêtement, en particulier un procédé de revêtement au rouleau et / ou un procédé d'enduction par pression et / ou par peinture au pistolet est utilisé.

3. Procédé selon l'une quelconque des revendications précédentes, **caractérisé en ce que** le mélange (10) est séché au moins en partie avant l'étape b).

4. Procédé selon l'une quelconque des revendications précédentes, **caractérisé en ce que** le mélange (10) à l'étape b) est durci partiellement par chauffage et / ou par rayonnement infrarouge et / ou ultraviolet.

5. Procédé selon l'une quelconque des revendications précédentes, **caractérisé en ce que** le durcissement partiel à l'étape c) est interrompu par le refroidissement du mélange (10) au moyen d'un liquide, en particulier au moyen d'eau.

6. Procédé selon l'une quelconque des revendications précédentes, **caractérisé en ce que** le mélange (10) durci partiellement après l'étape c) est enduit à une étape supplémentaire e) d'une huile, en particulier un lubrifiant d'emboutissage.

7. Procédé selon l'une quelconque des revendications précédentes, **caractérisé en ce que** le produit semi-fini (2) après l'étape c) et / ou e) le cas échéant, est mis en forme à une étape supplémentaire f), en particulier embouti, et / ou séparé, en particulier coupé, et / ou assemblé, en particulier collé et / ou soudé, et /ou enduit, en particulier peint.

8. Procédé selon l'une quelconque des revendications 1 à 7, **caractérisé en ce qu'**un mélange (10), en particulier une peinture, est utilisé pour enduire le produit semi-fini (12), qui comprend les composants réticulables suivants :
une résine phénolique
une résine époxy
un isocyanate bloqué
un diluant réactif
le mélange (10) pouvant passer par réticulation des composants d'un état fluide à un état durci.

9. Procédé selon la revendication 8, **caractérisé en ce que** la composition du mélange utilisé est la suivante :
résine phénolique (à 55 %) entre 3% et 5% (eau chaude);
résine époxy entre 1 % et 3% (eau chaude);
isocyanate bloqué (à 75 %) entre 11 % et 17% (eau chaude);
diluant réactif entre 1,5% et 3% (eau chaude).

10. Procédé selon la revendication 8 ou 9, **caractérisé en ce qu'**en tant que composant du mélange (10) est prévu en plus un pigment métallique et / ou un pigment de protection contre la corrosion et / ou un inhibiteur et / ou un épaississant et / ou un additif rhéologique et / ou un additif de dispersion et / ou un additif de mélange et / ou un solvant.

11. Produit semi-fini (12), en particulier une large bande pour la construction de véhicules automobiles, **caractérisé en ce qu'**il est fabriqué au moyen d'un procédé selon l'une quelconque des revendications 1 à 10.
